# FASCICULE DE BREVET EUROPEEN

(11) **EP 1 225 084 B1**
(45) Date de publication et mention de la délivrance du brevet: **22.03.2006**
(21) Numéro de dépôt: 02290130.0
(22) Date de dépôt: 18.01.2002
(51) Int. Cl.: B60N 2/06, B60N 2/20

(54) **Siège à géométrie variable**
Sitz mit veränderlicher Form
Seat with variable shape

(30) Priorité: 19.01.2001 FR 0100746
(43) Date de publication de la demande: 24.07.2002
(73) Titulaire: Renault s.a.s., 92100 Boulogne Billancourt (FR)
(72) Inventeur: Souville, Philippe, 78180 Montigny Le Bretonneux (FR); Zago, René, 78114 Magny les Hameaux (FR)

(56) Documents cités:
- EP-A- 0 331 241
- EP-A- 0 943 482
- EP-A- 1 040 961
- EP-A- 1 060 944
- WO-A-98/10682
- US-A- 2 800 947
- US-A- 3 637 253

## Description

La présente invention est relative à un siège à géométrie variable, notamment pour véhicules automobiles, du type comportant une partie formant assise et une partie formant dossier, la largeur frontale d'au moins l'une des parties, dite contractable, pouvant être réduite ou augmentée.

Par largeur frontale, il faut entendre la largeur occupée par cette partie quand le siège est vu de face.

Plus précisément, ce type de siège comprend un médaillon déformable s'étendant entre des premier et deuxième flasques de soutien, des premier et deuxième bords latéraux de ce médaillon étant fixés à ces premier et deuxième flasques de soutien respectivement, des moyens de translation d'au moins un des flasques de soutien relativement à l'autre entre des positions rapprochée et écartée de ces flasques de soutien, et des moyens de blocage des flasques de soutien en position écartée.

Les positions rapprochée et écartée des flasques de soutien correspondent à des positions rangée et déployée du médaillon dans lesquelles les largeurs frontales sont minimale et maximale, respectivement.

Ce type de siège est notamment utilisé pour réduire la largeur frontale du dossier d'une banquette arrière afin de permettre l'accès aux places arrière dans un véhicule à 3 portes.

Une banquette est un siège unique ou une juxtaposition de sièges indépendants offrant plusieurs places.

On connaît de US 2,800,947 (correspondant an préambule de la revendication indépendante) un siège du type précité dont la largeur frontale du dossier peut être réduite par compression du médaillon du dossier entre les deux flasques de soutien du dossier, le médaillon étant classiquement constitué d'un bloc de mousse recouvert de tissu. La mousse sert de moyen de blocage des flasques de soutien en position écartée. Elle est cependant difficile à comprimer, ce qui limite la réduction de la largeur frontale ou implique des moyens de compression complexes et volumineux.

Un siège conforme à US 2,800,947 ne permet pas, par exemple, une réduction de la largeur frontale suffisante pour autoriser le recul la banquette entre les roues arrière et ainsi augmenter la place entre cette banquette et les sièges avant.

La présente invention a pour but principal de fournir un siège à géométrie variable dont la largeur frontale d'au moins une des parties formant assise et formant dossier est contractable dans des proportions importantes.

On atteint ce but de l'invention, avec un siège du type précité caractérisé en ce que le médaillon d'au moins une des parties formant assise et dossier est constitué d'un revêtement souple ne comportant pas de coussin, ledit revêtement souple étant rétracté ou tendu entre les flasques de soutien en position rapprochée ou écartée desdits flasques de soutien, respectivement.

Le médaillon de ladite partie ne présente plus ainsi de résistance à la compression, ce qui permet de rapprocher les deux flasques de soutien jusqu'à ce qu'ils soient adjacents l'un à l'autre. Cette partie est ainsi contractable dans des proportions importantes.

Suivant d'autres caractéristiques de l'invention, pouvant exister seules ou en combinaison,
- les premier et deuxième flasques de soutien de la partie formant assise sont solidaires des premier et deuxième flasques de soutien de la partie formant
- dossier, ce qui permet de modifier simultanément les largeurs frontales du dossier et de l'assise;
- lesdits moyens de translation comportent au moins un premier et un deuxième rails montés fixes par rapport aux dits premier et deuxième flasques de soutien, respectivement, ledit premier rail coulissant sur ledit deuxième rail entre les positions écartée et rapprochée desdits flasques de soutien ;
- des premiers et deuxièmes rails solidaires des premier et deuxième flasques de soutien, respectivement, lesdits premiers rails coulissant sur lesdits deuxièmes rails entre les positions écartée et rapprochée desdits flasques de soutien ;
- ledit médaillon est rétracté « en accordéon » en position rapprochée desdits flasques de soutien, ce qui permet de plus rapprocher les deux flasques de soutien l'un de l'autre que si le médaillon est rétracté sans être plié ;
- ledit médaillon est constitué d'un matériau extensible ;
- ledit médaillon est au moins en partie enroulé autour d'un enrouleur en position rapprochée desdits flasques de soutien et au moins en partie déroulé en position écartée desdits flasques de soutien, et le siège comporte des moyens de blocage dudit enrouleur en position écartée des flasques de soutien, ce qui permet d'augmenter la largeur contractable de la partie contractable du siège ;
- le siège comporte des moyens de tension dudit médaillon comprenant au moins une genouillère comportant au moins des premier et deuxième bras articulés entre eux, montés en pivot par rapport aux dits premier et deuxième flasques de soutien respectivement autour de premier et deuxième axes A et B respectivement, conformés pour être alignés dans la position écartée desdits flasques de soutien
- le siège comporte des moyens de commande de ladite genouillère, lesdits moyens de commande comportant un bras de commande, une came, une tringle et une bielle d'appui coopérants de manière qu'une rotation dudit bras de commande déplie au moins en partie ladite genouillère, ces moyens pouvant être utilisés pour tendre le médaillon et pour le maintenir en tension ;
- un bras de levier, solidaire et sensiblement perpendiculaire audit bras de commande, porte un appui-tête dudit siège, et lesdits moyens de commande sont configurés pour positionner ledit appui-tête au-dessus ladite partie formant dossier dudit siège en position écartée desdits flasques de soutien, ce qui permet à l'utilisateur de tendre ledit médaillon sans effort excessif, tout en disposant, dans la même opération, un appui-tête derrière le siège ;
- ledit bras de levier est bloqué derrière ladite partie formant dossier dudit siège en position écartée desdits flasques de soutien, ce qui évite que le médaillon ne se rétracte sous le poids du passager ;
- le siège comprend des moyens pour faire basculer latéralement en position verticale et à une hauteur déterminée ladite partie formant assise ;
- ladite partie formant assise, placée en position verticale, sert d'accoudoir à un siège adjacent audit siège à géométrie variable.

La présente invention se rapporte également à une banquette de véhicule automobile caractérisée en ce qu'elle comporte au moins un siège conforme à l'invention.

La partie contractable du siège de cette banquette peut comporter une plaque de soutien au moins en partie escamotable au dos d'une partie homologue d'un autre siège adjacent.

La partie contractable du siège de cette banquette peut également comporter un flasque de soutien comportant des tenons, une partie d'un autre siège adjacent, homologue à ladite partie contractable, comportant un flanc intérieur adjacent audit flasque de soutien en position écartée desdits flasques de soutien, ledit flanc intérieur comportant des mortaises, et lesdits tenons étant logés dans lesdites mortaises en position écartée desdits flasques de soutien.

La présente invention se rapporte également à un véhicule caractérisé en ce qu'il comporte un siège ou une banquette conforme à l'invention.

D'autres caractéristiques et avantages de la présente invention apparaîtront à la lecture de la description qui va suivre et à l'examen du dessin annexé dans lequel
- la figure 1 représente une vue en perspective d'un siège incorporé dans une banquette arrière, selon le mode de réalisation préféré de l'invention et dans la position écartée des flasques de soutien du dossier, les médaillons et les moyens de blocage des flasques de soutien en position écartée des flasques de soutien n'ayant pas été représentés pour faciliter la lisibilité,
- la figure 2 représente une vue en coupe partielle selon le plan P de la banquette représentée sur la figure 1, vue de dessus, les médaillons étant représentés mais ni les appuis-tête, ni les moyens de blocage des flasques de soutien en position écartée,
- la figure 3 représente une vue en perspective d'un dossier contractable selon le mode de réalisation préféré de l'invention, en position écartée des flasques de soutien, les moyens de blocage des flasques de soutien en position écartée des flasques de soutien étant représentés mais pas les médaillons,
- la figure 4 représente une vue en perspective des moyens de blocage des flasques de soutien, dans une position intermédiaire entre les positions rapprochée et écartée des flasques de soutien, selon le mode de réalisation préféré de l'invention,
- la figure 5 représente une vue en coupe partielle de la banquette représentée sur la figure 1, selon le plan P' .

Dans la description et les revendications qui vont suivre, les indications relatives à la localisation des éléments décrits, telles que "horizontal", "avant", "arrière", "latéral" "haut", "bas", doivent être interprétées classiquement comme celles que fournirait un observateur assis dans le véhicule et regardant vers son capot.

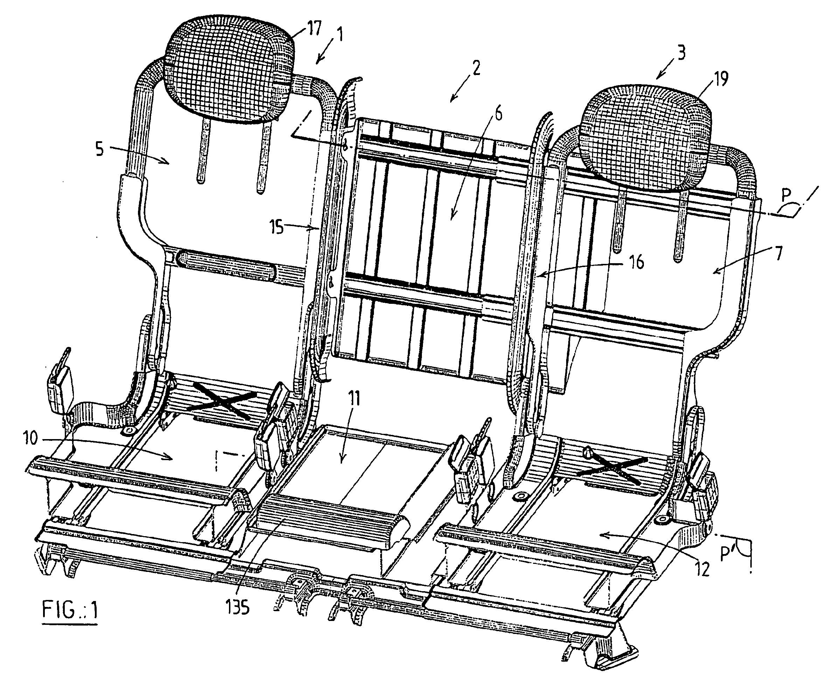

Dans le mode de réalisation préféré de l'invention, le siège selon la présente invention est utilisé pour constituer la place du milieu d'une banquette arrière à trois places d'un véhicule automobile. Cette situation est illustrée par la figure 1.

Cette banquette comporte des premier, deuxième et troisième sièges 1, 2 et 3 respectivement, le deuxième siège étant conforme à l'invention.

Le premier siège 1 et le troisième siège 3 sont sensiblement symétriques par rapport au plan médian du véhicule. Ils peuvent être dotés des mêmes fonctionnalités telles que mobilité d'avant en arrière, mobilité latérale, basculement vers l'arrière ou l'avant du véhicule de leurs dossiers ou/et de leurs assises.

Les premier, deuxième et troisième sièges 1, 2 et 3 comportent des dossiers 5, 6, 7 respectivement et des assises 10, 11, 12 respectivement.

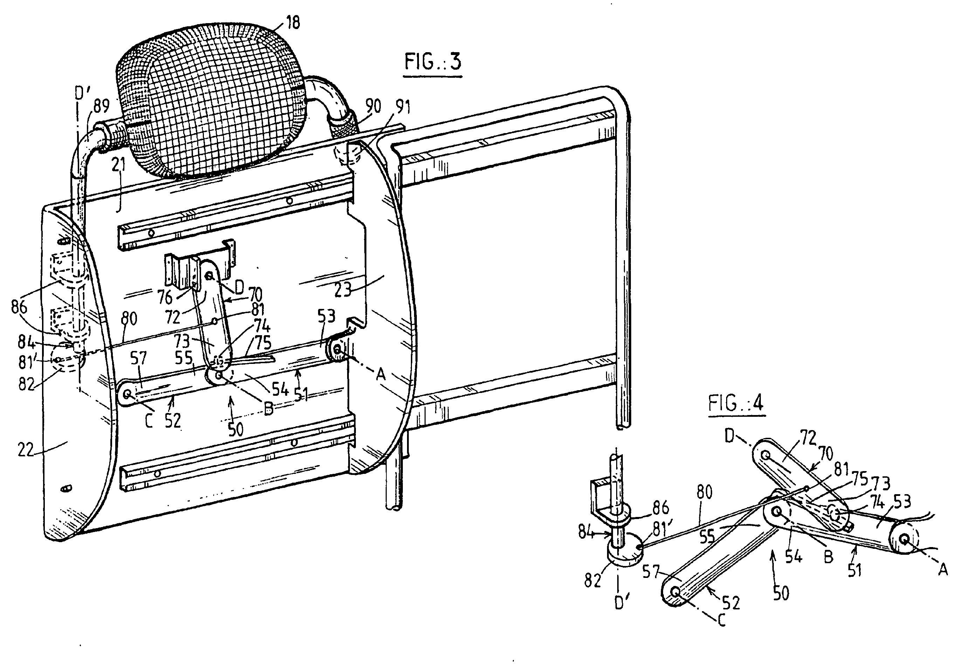

Les flancs des dossiers 5 et 7 des premier et troisième sièges, adjacents au deuxième siège 2 sont appelés flancs intérieurs 15 et 16, respectivement. Des premier, deuxième et troisième appuis-tête, 17, 18 et 19 respectivement peuvent être apposés au-dessus des dossiers 5, 6 et 7 des premier, deuxième et troisième sièges 1, 2 et 3 respectivement. Le deuxième appui-tête 18 est illustré sur la figure 3.

Le deuxième siège comporte un dossier 6 contractable et une assise 11 du type "strapontin".

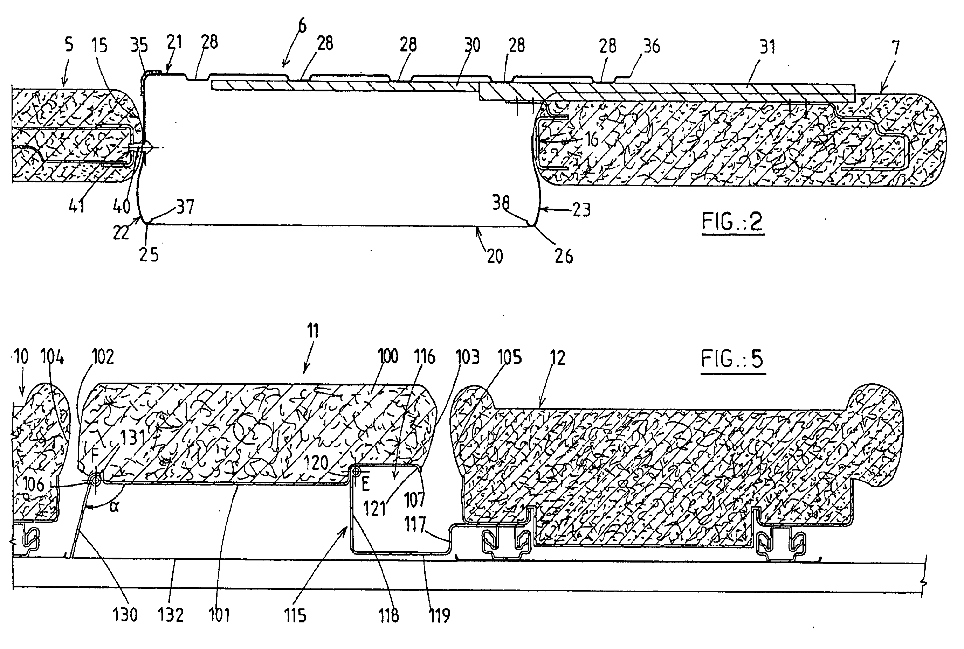

La figure 2 illustre la structure du dossier 6 du deuxième siège 2.

Le dossier 6 comporte :
- un médaillon 20 formant la face avant du dossier, destiné à servir de surface d'appui au passager,
- une ossature soutenant le médaillon 20 comprenant une plaque de soutien de dossier 21 formant la face arrière du dossier et des premier et deuxième flasques de soutien, 22 et 23 respectivement, formant les flancs du dossier. Le premier flasque de soutien 22 est de préférence mobile, le deuxième flasque de soutien 23 est de préférence fixé au flanc intérieur 16 du dossier 7 du troisième siège 3.

Le médaillon 20 est un revêtement en tissu comportant plusieurs couches superposées et solidaires. Dans le mode de réalisation préféré de l'invention, ces couches comprennent au moins une couche de mousse de quelques millimètres d'épaisseur et une couche constituée d'un filet destiné à limiter la déformation du tissu.

Le médaillon 20, par exemple de forme sensiblement rectangulaire, est fixé aux flasques de soutien mobile et fixe, 22 et 23 respectivement, par ses premier et deuxième bords latéraux, 25 et 26 respectivement. En position écartée des flasques de soutien 22 et 23, c'est à dire lorsque le siège est destiné à servir de surface d'appui au passager, l'écartement des flasques de soutien 22 et 23 permet au médaillon 20 d'être tendu et de fournir ainsi au passager une surface d'appui confortable.

Le médaillon 20 peut être rétractable ou pliable en accordéon.

La plaque de soutien de dossier 21 est une plaque sensiblement plane, généralement en métal.

Sa forme, donnant la forme du dos du dossier, est sensiblement rectangulaire. Pour améliorer sa rigidité, des pliures 28, par exemple verticales, peuvent être formées sur la surface de la plaque de soutien de dossier 21.

La plaque de soutien de dossier 21 est au moins en partie escamotable latéralement derrière le dossier 7 du troisième siège 3. A cet effet, elle porte une première paire de rails 30, sensiblement horizontaux, coulissant sur une deuxième paire de rails 31 fixés au dos du dossier 7 du troisième siège 3.

Les première et deuxième paires de rails 30 et 31 sont conformées pour minimiser le déplacement vertical potentiel de la plaque de soutien de dossier 21 particulièrement en position écartée des flasques de soutien 22 et 23, c'est-à-dire lors de l'extension maximale de la première paire de rails 30 de la plaque de soutien de dossier 21 hors de la deuxième paire de rails 31 fixés au dos du dossier 7. La plaque de soutien de dossier 21 comprend un bord latéral extérieur 35 et un bord latéral intérieur 36, le bord latéral extérieur 35 étant, en position écartée des flasques de soutien 22 et 23, plus éloigné du troisième siège 3 que le bord latéral intérieur 36.

Les flasques de soutien 22 et 23 sont des plaques sensiblement planes, généralement en métal. Leur forme détermine la forme du profil du dossier 6. Dans le mode de réalisation préféré de l'invention, les flasques 22 et 23 ont une forme sensiblement allongée et sont orientés parallèlement l'un à l'autre, perpendiculairement à la plaque de soutien de dossier 21.

Les bords latéraux 25 et 26 du médaillon 20 sont fixés à des bords avant 37 et 38 respectivement des flasques de soutien 22 et 23. Pour éviter toute arête agressive, les bords avant 37 et 38 des flasques de soutien 22 et 23 sont repliés sur eux-mêmes à 180° environ vers le médaillon 20. Les flasques de soutien 22 et 23 ont un profil arrondi sur leurs bords avant 37 et 38 afin d'améliorer l'ergonomie du deuxième siège 2.

Le flasque de soutien mobile 22 est fixé au bord latéral extérieur 35 de la plaque de soutien de dossier 21. Le flasque de soutien fixe 23 est solidaire du flanc intérieur 16 du dossier 7 du troisième siège 3, en vis-à-vis du flasque de soutien mobile 22. En position écartée des flasques de soutien 22 et 23, le flasque de soutien mobile 22 est adjacent au flanc intérieur 15 du premier siège 1. En position rapprochée des flasques de soutien 22 et 23, il est situé au voisinage du flanc intérieur 16 du troisième siège 3, le médaillon 20 étant contracté entre les deux flasques de soutien 22 et 23.

Pour améliorer la rigidité du dossier 6, des tenons 40 sont fixés sur le flasque de soutien mobile 22, orientés de manière à se loger, en position écartée des flasques de soutien 22 et 23, dans des mortaises 41 de forme complémentaire, percées dans l'ossature du dossier 5 du premier siège 1.

En position écartée des flasques de soutien 22 et 23, le médaillon 20 est tendu entre les flasques de soutien 22 et 23. Des moyens de tension du médaillon 20, non représentés sur les figures 1 et 2, sont nécessaires pour maintenir en tension le médaillon 20. Ces moyens sont représentés en figures 3 et 4.

Une genouillère 50 comporte des premier et deuxième bras 51 et 52.

Une première extrémité 53 du premier bras 51 est fixée au flasque de soutien fixe 23 par une liaison pivot autour d'un axe A sensiblement perpendiculaire à la plaque de soutien de dossier 21.

Une deuxième extrémité 54 du premier bras 51 est fixée à une première extrémité 55 du deuxième bras 52 par une liaison pivot autour d'un axe B sensiblement perpendiculaire à la plaque de soutien de dossier 21.

Une deuxième extrémité 57 du deuxième bras 52 est fixée à la plaque de soutien de dossier 21 par une liaison pivot autour d'un axe C sensiblement perpendiculaire à la plaque de soutien de dossier 21.

En position rapprochée des flasques de soutien 22 et 23, la genouillère est repliée, la deuxième extrémité 57 du deuxième bras 52 étant au voisinage de la première extrémité 53 du premier bras 51, la cassure de la genouillère 50 étant par exemple au-dessus des deux bras 51 et 52. La genouillère 50 est conformée pour ne pouvoir se casser que dans un seul sens. Une butée peut être fixée sur la plaque de soutien de dossier 21 ou sur la genouillère 50 dans ce but.

Dans la position écartée des flasques de soutien 22 et 23 représentée en figure 3, les deux bras 51 et 52 de la genouillère 50 sont sensiblement alignés et horizontaux. Les deux bras 51 et 52 présentent une longueur sensiblement identique et déterminée de manière que l'écartement des deux flasques de soutien 22 et 23 permette au médaillon 20 d'être suffisamment tendu pour servir d'appui au passager.

La tension du médaillon 20 et l'appui du passager se traduisent par une force de rappel tendant à rapprocher les deux flasques de soutien 22 et 23 l'un de l'autre. L'alignement des deux bras 51 et 52 en position écartée des flasques de soutien 22 et 23 permet à la genouillère 50 de compenser cette force de rappel sans qu'elle ne se replie sur elle-même. Mais cet équilibre est instable.

Des moyens de commande de la genouillère 50 sont prévus pour mettre en place et stabiliser cet équilibre.

Ces moyens comprennent une bielle d'appui 70, montée en rotation sur la plaque de soutien de dossier 21 autour d'un axe D sensiblement perpendiculaire à cette dernière. L'axe D est sensiblement à la verticale de l'axe B de la genouillère 50 en position écartée des flasques de soutien 22 et 23.

La bielle d'appui 70 a une forme allongée. Sa première extrémité 72 est traversée par l'axe D ; sa deuxième extrémité 73 comporte un ergot d'appui 74 destiné à prendre appui sur une piste portée par une rampe 75, par exemple métallique, solidaire du premier bras 51 de la genouillère 50. La longueur de la bielle d'appui 70 est déterminée de manière qu'en position écartée des flasques de soutien 22 et 23 l'ergot d'appui 74 soit sensiblement à la verticale de l'axe D et prenne appui sur une portion de la rampe 75 sensiblement à la verticale de l'axe B de la genouillère 50. Toute force verticale de bas en haut capable de rompre l'équilibre instable précédemment décrit est donc compensée par la bielle d'appui 70 sensiblement en position verticale.

Plus précisément, en position écartée des flasques de soutien 22 et 23, la bielle d'appui 70 n'est pas parfaitement verticale mais forme un angle de quelques degrés, par exemple de 3°, avec la verticale. Une butée 76 solidaire de la plaque de soutien de dossier 21 empêche tout positionnement de la bielle d'appui au-delà de cette position.

Les frottements de la bielle d'appui 70 au voisinage de l'axe D d'une part et entre la rampe 75 et l'ergot d'appui 74 d'autre part assurent l'équilibre de la bielle d'appui 70 et de la genouillère 50. Cet équilibre est instable et facilement rompu par l'utilisateur dès qu'il exerce une poussée sur le flasque de soutien mobile 22 en direction du flasque de soutien fixe 23.

La bielle d'appui 70 est commandée par une tringle 80 fixée par une première extrémité 81 sur la bielle d'appui 70, par une deuxième extrémité 81' à la périphérie d'une came 82. Le point de fixation de la première extrémité 81 est localisé à distance de l'axe de rotation D de la bielle d'appui 70, de manière à augmenter le couple exercé sur la bielle d'appui 70 lors de la traction ou de la poussée sur la tringle 80.

La came 82 est solidaire d'un bras de commande 84 en rotation autour d'un axe D' par exemple sensiblement vertical. Les paliers 86, solidaires de la plaque de soutien de dossier 21, guident la rotation du bras de commande 84. La rotation du bras de commande 84 entraîne une poussée ou une traction sur la tringle 80 et le déplacement de l'extrémité 81 de la tringle 80 fixée à la bielle d'appui 70. La bielle d'appui 70 tourne en conséquence autour de l'axe D entre une position inclinée où la bielle est inclinée par exemple à environ 45° avec la verticale et une position sensiblement verticale. La rampe 75 est conformée pour que l'ergot d'appui 74 entre en contact avec elle sensiblement dans une position intermédiaire des flasques de soutien 22 et 23 entre les positions rapprochée et écartée, représentée sur la figure 4. Dans la position intermédiaire, la genouillère 50, partiellement dépliée ou légèrement tendue entre les deux flasques de soutien 22 et 23, n'exerce pas ou peu de force de rappel entre ces deux flasques de soutien.

Lors du déploiement du médaillon 20, la force de rappel augmente entre la position intermédiaire et la position écartée des flasques de soutien 22 et 23, d'autant plus que le médaillon approche sa limite d'extensibilité. Les moyens de commande de la genouillère peuvent aider l'utilisateur à compenser cette force de rappel.

Une traction sur la tringle 80 permet à l'ergot d'appui 74 d'appuyer sur la rampe 75 et d'exercer ainsi une poussée sensiblement verticale de haut en bas sur la genouillère 50 permettant de la déplier depuis la position intermédiaire jusqu'à la position écartée des flasques de soutien 22 et 23 où ses deux bras 51 et 52 sont sensiblement alignés et horizontaux.

Un bras de levier 89, sensiblement perpendiculaire au bras de commande 84, permet à l'utilisateur d'exercer cette poussée sur la genouillère 50 sans effort excessif.

Le bras de levier 89 peut porter l'appui-tête 18 ainsi qu'une poignée 90 facilitant sa prise en main. La came 82 peut être conformée de façon à ce que l'appui-tête 18 soit en position d'utilisation pour un passager assis sur le deuxième siège 2 en position écartée des flasques de soutien 22 et 23 et adjacent au dos de l'appui-tête 17 du premier siège 1 quand les flasques de soutien 22 et 23 sont en position rapprochée.

Dans cette configuration, pour déplier le médaillon 20 entre la position intermédiaire et la position écartée des flasques de soutien 22 et 23 à l'encontre de la force de rappel exercée par le médaillon 50, l'utilisateur fait tourner le bras de commande 84 dans le sens des aiguilles d'une montre, vu de dessus, ce qui exerce une traction sur la tringle 80 et fait tourner la bielle d'appui 70 autour de l'axe D jusqu'à une position sensiblement verticale. La rotation de la bielle d'appui 70 fait se déplacer l'ergot d'appui 74 sur la rampe 75 en exerçant une pression verticale de haut en bas sur le bras 51. La genouillère 50 se déplie jusqu'à la position écartée des flasques de soutien 22 et 23.

On remarquera qu'il n'y a pas nécessité absolue pour l'utilisateur de se servir des moyens de commande de la genouillère 50 pour la déplier entre la position intermédiaire et la position écartée des flasques de soutien 22 et 23. Une traction plus vigoureuse sur le flasque de soutien mobile 22 permettrait d'atteindre le même résultat. La rotation du bras de commande 84 et son blocage final sont cependant souhaitables pour assurer l'équilibre du dossier 6 ainsi déployé.

En position écartée des flasques de soutien 22 et 23, des moyens de blocage 91 maintiennent fixement le bras de commande 84 et donc le flasque de soutien mobile 22. Ils assurent ainsi l'équilibre de la bielle d'appui 70 en position sensiblement verticale, et donc le maintien du dossier 7 en position écartée des flasques de soutien 22 et 23.

Pour ranger le médaillon 20 du dossier 6, l'utilisateur effectue les opérations inverses de celles réalisées pour le déployer. Après avoir débloqué le bras de commande 84, l'équilibre instable de la bielle d'appui 70 est facilement rompu en poussant le flasque de soutien mobile 22 en direction du flasque de soutien fixe 23.

Dans un mode de réalisation de l'invention non représenté, un deuxième ergot peut être ajouté à une sur longueur de l'extrémité 73 de la bielle d'appui 70, de manière que ce deuxième ergot et le premier ergot 74 forment une fourchette à deux dents entre lesquelles la rampe 75 s'insère lors du dépliage de la genouillère 50. En position écartée des flasques de soutien 22 et 23, le deuxième ergot est positionné sous la rampe 75, l'ergot 74 est positionné au-dessus de la rampe 75, comme précédemment décrit.

Le déblocage et la rotation dans le sens inverse des aiguilles d'une montre, vu de dessus, du bras de commande 84, entraînent une poussée sur la tringle 80 et une poussée du deuxième ergot sous la genouillère 50. La genouillère 50 se débloque ainsi facilement, même si, en position écartée des flasques de soutien 22 et 23, la bielle d'appui 70 est rigoureusement verticale.

En regard de la figure 5, l'assise 11 comporte un coussin 100 par exemple en mousse, fixé sur une plaque de soutien d'assise 101 sensiblement plane. Ce coussin 100 comporte des premier et deuxième flancs latéraux, 102 et 103, adjacents en position horizontale du coussin 100 respectivement aux flancs intérieurs 104 et 105 des assises 10 et 12 des premier et troisième sièges 1 et 3. La plaque de soutien d'assise comporte des premier et deuxième bords latéraux 106 et 107 bordant respectivement les premier et deuxième flancs latéraux 102 et 103 du coussin 100.

L'assise 11 peut basculer latéralement, à la manière d'un strapontin, vers le troisième siège 3.

Le basculement s'effectue autour d'un axe E sensiblement horizontal et perpendiculaire au plan de la figure 5. L'axe E permet la rotation de la plaque de soutien d'assise 101 sur un support 115.

L'axe E est localisé sous la plaque de soutien d'assise 101 à une distance du deuxième flanc latéral 103 sensiblement égale à l'épaisseur du coussin 100.

Le support 115 a la forme d'un profilé en U dont l'ouverture 116 est orientée vers le haut,

Une aile latérale extérieure 117 adjacente au flanc intérieur 105 de l'assise 12 du troisième siège 3, sensiblement verticale, solidaire de l'ossature du troisième siège 3, et une aile latérale intérieure 118 sensiblement parallèle à l'aile latérale extérieure 117, mais plus large que l'aile latérale extérieure 117, forment les deux branches du U.

Enfin, une base 119 constitue le fond du U du profilé, sensiblement horizontal et d'une largeur sensiblement supérieure à la largeur du deuxième flanc latéral 103 de l'assise 11.

L'axe E est localisé sur la tranche de l'aile latérale intérieure 118.

Lors du basculement autour de l'axe E de la plaque de soutien d'assise 101, le deuxième flanc latéral 103 vient se placer dans l'ouverture 116 du profilé en U jusqu'à être adjacent à la base 119. La plaque de soutien d'assise 101 est alors sensiblement verticale. Le premier flanc latéral 102 de l'assise 11 est alors sensiblement horizontal et peut servir d'accoudoir au troisième siège 3.

Dans un mode de réalisation de l'invention non représenté, l'axe de rotation E peut coulisser verticalement le long de l'aile latérale intérieure 118 du support 115 de manière que la hauteur de l'accoudoir soit variable. La largeur de l'aile latérale intérieure 118 du support 115 peut également être augmentée afin de surélever la hauteur de l'accoudoir.

La plaque de soutien d'assise 101 comporte une première pliure 120 prenant appui sur l'aile latérale intérieure 118 du support 115 du côté opposé à l'ouverture 116 du support 115 lorsque la plaque de soutien d'assise 101 est sensiblement en position horizontale.

La plaque de soutien d'assise 101 comporte une deuxième pliure 121 prenant appui sur l'aile latérale intérieure 118, du côté de l'ouverture 116 du support 115 lorsque la plaque de soutien d'assise 101 est sensiblement en position verticale.

La rotation autour de l'axe E de la plaque de soutien d'assise 101 est ainsi limitée à 90° entre la position horizontale et la position verticale.

En position horizontale, le poids du passager sur l'assise 11 représente une force importante. Pour limiter le couple exercé sur l'axe E, une patte de support 130 est apposée sur la plaque de soutien d'assise 101 au voisinage du premier flanc latéral 102 de l'assise 7. La patte de support 130 est articulée avec la plaque de soutien d'assise 101 en rotation autour d'un axe F, sensiblement parallèle à l'axe de rotation E.

La rotation libre autour de l'axe F permet à la patte de support 130 de rester sensiblement verticale quelle que soit la position de l'assise 11. Ainsi en position horizontale de l'assise 11, la patte de support 130 forme un angle sensiblement égal à 90° avec la plaque de soutien d'assise 101.

Un mécanisme non représenté positionne la patte de support 130 de manière qu'elle forme un angle α légèrement supérieur à 90° avec la plaque de soutien d'assise 101 quand la plaque de soutien d'assise 101 est en position horizontale.

La plaque de soutien d'assise 101 comporte une troisième pliure 131 conformée pour bloquer toute rotation de la patte de support 130 au-delà de l'angle α.

En position horizontale de l'assise 11, la patte de support 130 prend appui sur le plancher 132 du véhicule.

En position verticale de l'assise 11, la patte de support 130 est adjacente à la plaque de soutien d'assise 101.

Dans le mode de réalisation préféré de l'invention, l'assise 11 est basculante, plutôt que rétractable à la manière du dossier 6. En position écartée des flasques de soutien 22 et 23, une assise rétractable à la manière du dossier 6 présente en effet une solidité inférieure à celle d'une assise basculante, ce qui peut être préjudiciable, la charge à supporter étant très supérieure à celle que doit supporter le dossier. Réciproquement, un dossier basculant à la manière de l'assise 11 serait particulièrement encombrant.

On notera, en regard de la figure 1 qu'une pièce semi-cylindrique 135 peut être apposée sur la partie avant de la plaque de soutien d'assise 101 afin d'améliorer le confort du passager. Le coussin 100 est conformé en conséquence.

Pour passer de la position rapprochée des flasques de soutien 22 et 23 à la position écartée des flasques de soutien 22 et 23, l'utilisateur procède en plusieurs étapes :

Dans une première étape, il écarte latéralement les premier et troisième siège 1 et 3, afin de laisser entre eux l'espace nécessaire au déploiement du deuxième siège 2. En fonction de la configuration des premier et deuxième appuis-tête 17 et 18 un dégagement ou un déblocage préalable du deuxième appui-tête 18 peut être nécessaire.

L'utilisateur tire alors le flasque de soutien mobile 22 vers le flanc intérieur 15 du premier siège 1 faisant ainsi coulisser sur les rails 31 la plaque de soutien de dossier 21, en partie escamotée derrière le dossier 7 du troisième siège 3 en position rapprochée des flasques de soutien 22 et 23. Des moyens de préhension du flasque de soutien mobile 22 peuvent être prévus.

Le médaillon 20 se déplie jusqu'à une position intermédiaire où, sensiblement tendu, il commence à exercer une force de rappel s'opposant à l'action de l'utilisateur.

Plus l'utilisateur tire sur le flasque de soutien mobile 22 plus cette force de rappel augmente et plus il lui est difficile de la compenser. De plus, si l'utilisateur lâche le flasque de soutien mobile 22 après avoir tendu le médaillon 20 au-delà de la position intermédiaire, la force de rappel ramène le flasque de soutien mobile 22 sensiblement dans la position intermédiaire.

Après avoir atteint sensiblement la position intermédiaire, l'utilisateur fait tourner le bras de commande 84 dans le sens des aiguilles d'une montre vu de dessus. Cette rotation entraîne celle de la came 82 et une traction sur la tringle 80. Cette traction exerce un couple sur la bielle d'appui 70 tendant à aligner la bielle d'appui 70 sensiblement à la verticale.

La force de rappel exercée par le médaillon 20 s'oppose à un alignement des deux bras 51 et 52 de la genouillère 50. La traction sur la bielle d'appui 70 permet d'exercer, par l'intermédiaire du contact entre l'ergot 74 de la bielle d'appui 70 et la rampe 75 fixée sur le premier bras 51 de la genouillère 50 à proximité de l'articulation entre les deux bras 51 et 52, une force verticale de bas en haut tendant au contraire à aligner les deux bras 51 et 52 de la genouillère 50.

En faisant tourner le bras de commande 84 dans le sens des aiguilles d'une montre vu de dessus, l'utilisateur exerce donc indirectement une force contraire à la force de rappel exercée par le médaillon 20. Cette force est démultipliée par le bras de levier 89. En agissant sur la poignée 90 à l'extrémité de ce bras de levier 89, l'utilisateur exerce sans effort important une force contraire à la force de rappel exercée par le médaillon 20, même lorsque le flasque de soutien mobile 22 est à proximité du flanc intérieur 15 du premier siège 1.

L'utilisateur poursuit la rotation du bras de commande 84 jusqu'à avoir effectué un demi-tour, c'est-à-dire jusqu'à ce que le deuxième appui-tête 18 soit sensiblement aligné avec les premier et troisième appuis-tête 17 et 19. Dans cette position, le dossier 6 du deuxième siège 2 est déployé, c'est-à-dire que
- la genouillère 50 est totalement dépliée, les deux bras 51 et 52 étant sensiblement alignés ;
- la bielle d'appui 70 est, éventuellement en butée, dans une position proche de la verticale mais décalée de celle-ci de quelques degrés de façon à ce que la bielle d'appui 70 ne soit jamais parfaitement verticale ;
- le médaillon 20 est suffisamment tendu pour servir de surface d'appui à un passager ;
- les tenons 40 sont logés dans les mortaises 41 de façon à rigidifier le dossier 6 du deuxième étage 2.

L'utilisateur bloque alors le bras de commande 84 dans cette position.

Pour ranger le médaillon 20 du dossier 6, l'utilisateur effectue les opérations inverses de celles décrites ci-dessus pour déployer ce dossier.

Dès le déblocage du bras de commande 84, une simple poussée sur le flasque de soutien mobile 21 vers le flasque de soutien fixe 23 suffit à rompre l'équilibre de la bielle d'appui 70 et de la genouillère 50. La tension du médaillon 20 le ramène immédiatement sensiblement dans la position intermédiaire.

L'utilisateur continue alors à rapprocher les flasques de soutien 22 et 23. Le médaillon 20 se rétracte sur lui-même. Le revêtement constituant le médaillon 20 peut être choisi particulièrement extensible de manière qu'en position rapprochée des flasques de soutien 22 et 23 il présente peu de plis. Il peut être également conformé pour se rétracter en accordéon.

Enfin un enrouleur sensiblement vertical peut enrouler le médaillon 20 à mesure que les flasques de soutien 22 et 23 se rapprochent l'un de l'autre. Des moyens de blocage de l'enrouleur en position écartée des flasques de soutien 22 et 23 sont prévus pour éviter que le médaillon 20 ne se détende sous l'action du poids du passager.

Comme cela apparaît clairement à présent, il est possible de réduire dans des proportions importantes la largeur frontale d'au moins une des parties formant assise et formant dossier d'un siège à géométrie variable selon l'invention.

Dans le mode de réalisation préféré de l'invention, après réduction de la largeur frontale des deux parties formant le deuxième siège 2, par contraction pour le dossier et par basculement pour l'assise, des moyens classiques de translation latérale des premier et troisième sièges 1 et 3 permettent de rapprocher ces deux sièges puis de les faire coulisser entre les deux roues arrière du véhicule.

Bien entendu, la présente invention n'est pas limitée au mode de réalisation décrit et représenté, fourni à titre d'exemple illustratif et non limitatif.

Par exemple, dans des modes de réalisation de l'invention non illustrés,
- l'assise 11 du deuxième siège 2 peut être contractable comme le dossier 6 du deuxième siège 2 ;
- les plaques de soutien de dossier et d'assise, 21 et 121 respectivement, peuvent être solidarisées afin que le dossier et l'assise se contractent simultanément ;
- la plaque de soutien d'une partie contractable peut s'escamoter à l'intérieur de la partie homologue d'un siège adjacent ;
- la rampe 75 peut être remplacée par une rainure pratiquée dans le premier bras 51.

## Revendications

1. Siège à géométrie variable, notamment pour véhicules automobiles, comportant une partie formant assise (11) et une partie formant dossier (6), au moins l'une desdites parties dite contractable comprenant un médaillon (20) déformable s'étendant entre des premier (22) et deuxième (23) flasques de soutien, des premier (25) et deuxième (26) bords latéraux dudit médaillon (20) étant fixés aux dits premier (22) et deuxième (23) flasques de soutien respectivement, des moyens de translation (30,31) d'au moins un desdits flasques de soutien (22,23) relativement à l'autre entre des positions rapprochée et écartée desdits flasques de soutien (22,23), et des moyens de blocage desdits flasques de soutien (22,23) en position écartée desdits flasques de soutien (22,23),
**caractérisé en ce que** ledit médaillon (20) est constitué d'un revêtement souple ne comportant pas de coussin, ledit revêtement souple étant rétracté ou tendu entre lesdits flasques de soutien (22,23) en position rapprochée ou écartée desdits flasques de soutien (22,23), respectivement.

2. Siège à géométrie variable selon la revendication 1 **caractérisé en ce que** les premier (22) et deuxième (23) flasques de soutien (22,23) de la partie formant assise sont solidaires des premier (22) et deuxième (23) flasques de soutien de la partie formant dossier.

3. Siège à géométrie variable selon les revendications 1 ou 2 **caractérisé en ce que** lesdits moyens de translation comportent au moins un premier (30) et un deuxième (31) rails montés fixes par rapport aux dits premier (22) et deuxième (23) flasques de soutien, respectivement, ledit premier rail (30) coulissant sur ledit deuxième rail (31) entre lesdites positions rapprochée et écartée desdits flasques de soutien (22, 23) .

4. Siège à géométrie variable selon l'une quelconque des revendications précédentes **caractérisé en ce que** ledit médaillon (20) est rétracté « en accordéon » en position rapprochée desdits flasques de soutien (22,23).

5. Siège à géométrie variable selon l'une quelconque des revendications précédentes **caractérisé en ce que** ledit médaillon (20) est constitué d'un matériau extensible.

6. Siège à géométrie variable selon l'une quelconque des revendications précédentes **caractérisé en ce que** ledit médaillon (20) est au moins en partie enroulé autour d'un enrouleur en position rapprochée desdits flasques de soutien (22,23) et au moins en partie déroulé en position écartée desdits flasques de soutien (22,23), et **en ce qu'**il comporte des moyens de blocage dudit enrouleur en position écartée desdits flasques de soutien (22,23).

7. Siège à géométrie variable selon l'une quelconque des revendications précédentes **caractérisé en ce qu'**il comporte des moyens de tension dudit médaillon (20) comprenant au moins une genouillère (50) comportant au moins des premier (51) et deuxième (52) bras articulés entre eux, montés en pivot par rapport aux dits premier (22) et deuxième (23) flasques de soutien respectivement autour de premier (A) et deuxième (B) axes respectivement, conformés pour être alignés dans la position écartée desdits flasques de soutien (22,23).

8. Siège à géométrie variable selon la revendication 7 **caractérisé en ce qu'**il comporte des moyens de commande de ladite genouillère (50), lesdits moyens de commande comportant un bras de commande (84), une came (82), une tringle (80) et une bielle d'appui (70) coopérants de manière qu'une rotation dudit bras de commande (84) déplie au moins en partie ladite genouillère (50).

9. Siège à géométrie variable selon la revendication 8 **caractérisé en ce qu'**un bras de levier (89), solidaire et sensiblement perpendiculaire audit bras de commande (84), porte un appui-tête (18) dudit siège (2), et **en ce que** lesdits moyens de commande sont configurés pour positionner ledit appui-tête (18) au dessus de ladite partie formant dossier (6) dudit siège (2) en position écartée desdits fiasques de soutien (22,23).

10. Siège à géométrie variable selon la revendication 9 **caractérisé en ce que** ledit bras de levier (89) est bloqué derrière ladite partie formant dossier (6) dudit siège (2) en position écartée desdits flasques de soutien (22,23).

11. Siège à géométrie variable selon l'une quelconque des revendications précédentes **caractérisé en ce que** ledit siège (2) comprend des moyens pour faire basculer latéralement en position verticale et à une hauteur déterminée ladite partie formant assise (11).

12. Siège à géométrie variable selon la revendication 11, **caractérisé en ce que** ladite partie formant assise (11), placée en position verticale, sert d'accoudoir à un siège (3) adjacent audit siège à géométrie variable.

13. Banquette de véhicule automobile, **caractérisée en ce qu'**elle comporte au moins un siège (2) à géométrie variable conforme à l'une quelconque des revendications précédentes.

14. Banquette de véhicule automobile selon la revendication 13, **caractérisée en ce que** la partie contractable dudit siège (2) comporte une plaque de soutien (21,101) au moins en partie escamotable au dos d'une partie homologue d'un autre siège (7,12) adjacent.

15. Banquette de véhicule automobile selon les revendications 13 ou 14, **caractérisée en ce que** le flasque de soutien (22) de ladite partie contractable dudit siège (2) comporte des tenons (40), **en ce qu'**une partie (5) d'un autre siège (1) adjacent, homologue à ladite partie contractable (6), comporte un flanc intérieur (15) adjacent audit flasque de soutien (22) en position écartée desdits flasques de soutien (22,23), ledit flanc intérieur (15) comportant des mortaises (41), et **en ce que** lesdits tenons (40) sont logés dans lesdites mortaises (41) en position écartée desdits flasques de soutien (22,23).

16. Véhicule **caractérisé en ce qu'**il est équipé d'au moins un siège (2) à géométrie variable conforme à l'une quelconque des revendications précédentes.

## Patentansprüche

1. Sitz mit veränderbarer Geometrie, insbesondere für Kraftfahrzeuge, auf weisend ein Teil, welches ein Sitzteil (11) bildet, und ein Teil, welches eine Rückenlehne (6) bildet, wobei mindestens eines der als zusammenziehbar bezeichneten Teile ein verformbares Rahmenteil (20) aufweist, das sich zwischen ersten (22) und zweiten (23) Halteflanschen erstreckt, wobei erste (25) und zweite (26) seitliche Ränder des Rahmenteils (20) jeweils an den ersten (22) und zweiten (23) Halteflanschen befestigt sind, Mittel zur Translationsbewegung (30, 31) von mindestens einem der Halteflansche (22, 23) relativ zu dem anderen zwischen einer angenäherten und einer entfernten Position der Halteflansche (22, 23) und Arretiermittel der Halteflansche (22,23) in entfernter Position der Halteflansche (22,23),
**dadurch gekennzeichnet, dass** das Rahmenteil (20) aus einem nachgiebigen Bezug gebildet ist, der kein Polster aufweist, wobei der nachgiebige Bezug zwischen den Halteflanschen (22, 23) in angenäherter oder entfernter Position der Halteflansche (22, 23) jeweils zusammengezogen oder gespannt ist.

2. Sitz mit veränderbarer Geometrie nach Anspruch 1, **dadurch gekennzeichnet, dass** die ersten (22) und zweiten (23) Halteflansche (22,23) des Teils, welches das Sitzteil bildet, fest mit den ersten (22) und zweiten (23) Halteflanschen des Teils,welches die Rückenlehne bildet, verbunden sind:

3. Sitz mit veränderbarer Geometrie nach Anspruch 1 oder 2, **dadurch gekennzeichnet, dass** die Mittel zur Translationsbewegung mindestens eine erste (30) und eine zweite (31) Schiene aufweisen, welche fest im Verhältnis zu den ersten (22) und zweiten (23) Halteflanschen jeweils montiert sind, wobei die erste Schiene (30) auf der zweiten Schiene (31) zwischen der angenäherten Position und der entfernten Position der Halteflansche (22, 23) gleitet.

4. Sitz mit veränderbarer Geometrie nach irgendeinem der vorangegangenen Ansprüche, **dadurch gekennzeichnet, dass** das Rahmenteil (20) in angenäherter Position der Halteflansche (22, 23) "in Form einer Ziehharmonika" zusammengezogen ist.

5. Sitz mit veränderbarer Geometrie nach irgendeinem der vorangegangenen Ansprüche, **dadurch gekennzeichnet, dass** das Rahmenteil (20) aus einem dehnbaren Material gebildet ist.

6. Sitz mit veränderbarer Geometrie nach irgendeinem der vorangegangenen Anspruche, **dadurch gekennzeichnet, dass** das Rahmenteil (20) in angenäherter Position der Halteflansche (22, 23) mindestens teilweise um eine Aufwickelvorrichtung aufgewickelt ist und in entfernter Position der Halteflansche (22, 23) mindestens teilweise abgewickelt ist und dass es Mittel zum Arretieren der Aufwickelvorrichtung in entfernter Position der Halteflansche (22,23) aufweist.

7. Sitz mit veränderbarer Geometrie nach irgendeinem der vorangegangenen Ansprüche, **dadurch gekennzeichnet, dass** er Mittel zum Spannen des Rahmenteils (20) aufweist, welche mindestens einen Kniehebel (50) aufWeisen, der mindestens einen ersten (51) und einen zweiten (52) Arm umfasst, die untereinander angelenkt sind, welche drehend montiert sind im Verhältnis zu jeweils dem ersten (22) und dem zweiten (23) Halteflansch um jeweils eine erste Achse (A) und eine zweite Achse (B), die ausgestaltet sind, um in der entfernten Position der Halteflansche (22, 23) ausgerichtet zu sein.

8. Sitz mit veränderbarer Geometrie nach Anspruch 7, **dadurch gekennzeichnet, dass** er Steuermittel des Kniehebels (50) aufweist, wobei die Steuermittel einen Steuerarm (84), einen Nocken (82), ein Gestänge (80), und eine Andrückstange (70) aufweisen, welche derart zusammenwirken, dass eine Drehung des Steuerarms (84) mindestens teilweise den Kniehebel (50) ausklappt.

9. Sitz mit veränderbarer Geometrie nach Anspruch 8, **dadurch gekennzeichnet, dass** ein Hebelarm (89), der fest verbunden ist und im Wesentlichen senkrecht zu dem Steuerarm (84) ist, eine Kopfstütze (18) des Sitzes (2) trägt und dass die Steuermittel konfiguriert sind, um die Kopfstütze (18) über dem die Rückenlehne (6) des Sitzes (2) bildenden Teil in entfernter Position der Halteflansche (22, 23) zu positionieren.

10. Sitz mit veränderbarer Geometrie nach Anspruch 9, **dadurch gekennzeichnet, dass** der Hebelarm (89) hinter dem Teil, welches die Rückenlehne (6) des Sitzes (2) bildet, in entfernter Position der Halteflansche (22, 23) arretiert ist.

11. Sitz mit veränderbarer Geometrie nach irgendeinem der vorangegangenen Ansprüche, **dadurch gekennzeichnet, dass** der Sitz (2) Mittel aufweist zum seitlichen Kippenlassen des Teils, welches das Sitzteil (11) bildet, in vertikaler Position und auf eine vorherbestimmte Höhe.

12. Sitz mit veränderbarer Geometrie nach Anspruch 11, **dadurch gekennzeichnet, dass** das Teil, welches das Sitzteil (11) bildet, in vertikaler Position gesetzt als eine Armlehne für einen benachbarten Sitz (3) zu dem Sitz mit veränderbarer Geometrie dient.

13. Bank eines Kraftfahrzeugs, **dadurch gekennzeichnet, dass** sie mindestens einen Sitz (2) mit veränderbarer Geometrie gemäß irgendeinem der vorangegangenen Ansprüche aufweist,

14. Bank eines Kraftfahrzeugs nach Anspruch 13, **dadurch gekennzeichnet, dass** das zusammenziehbare Teil des Sitzes (2) eine Halteplatte (21, 101) aufweist, die mindestens teilweise auf der Rückseite eines entsprechenden Teils eines anderen benachbarten Sitzes (7, 12) einzichbar ist.

15. Bank eines Kraftfahrzeugs nach Anspruch 13 oder 14, **dadurch gekennzeichnet, dass** der Halteflansch (22) des einziehbaren Teils des Sitzes (2) Zapfen (40) aufweist, dass ein Teil (5) eines anderen, benachbarten Sitzes (1) entsprechend zu dem einziehbaren Teil (6) einen inneren Flansch (15) angrenzend zu dem Halteflansch (22) in entfernter Position der Halteflansche (22, 23) aufweist, wobei der innere Flansch (15) Zapfenlöcher (41) aufweist, und dass die Zapfen (40) in den Zapfenlöchern (41) in entfernter Position der Halteflansche (22,23) aufgenommen sind.

16. Fahrzeug, **dadurch gekennzeichnet, dass** es mit mindestens einem Sitz (2) mit veränderbarer Geometrie entsprechend zu irgendeinem der vorangegangenen Ansprüche ausgestattet ist.

## Claims

1. A vanable-geometry seat, in particular for motor vehicles, comprising a portion forming a squab (11) and a portion forming a back (6), at least one of said portions which is referred to as contractible comprising a deformable inset (20) extending between first (22) and second (23) support side plates, first (25) and second (26) side edges of said inset (20) being fixed to said first and second support side plates (22 and 23) respectively, means (30, 31) for translatory movement of at least one of said support side plates (22, 23) relative to the other between moved-together and moved-apart positions of said support side plates (22, 23) and means for blocking said support side plates (22, 23) in the moved-apart position of said support side plates (22, 23),
**characterised in that** said inset (20) is formed by a flexible covering not comprising any cushion, said flexible covering being retracted or taut between said support side plates (22, 23) in the moved-together or moved-apart position of said support side plates (22, 23) respectively.

2. A variable-geometry seat according to claim 1 **characterised in that** the first (22) and second (23) support side plates (22,23) of the squab-forming portion are fixed with respect to the first (22) and second (23) support side plates of the back-forming portion.

3. A variable-geometry seat according to claim 1 or claim 2 **characterised in that** said translation means comprise at least a first (30) and a second (31) rail which are mounted fixedly with respect to said first (22) and second (23) support side plates respectively, said first rail (30) sliding on said second rail (31) between said moved-together and moved-apart positions of said support side plates (22, 23).

4. A variable-geometry seat according to any one of the preceding claims **characterised in that** said inset (20) is retracted 'accordion-like' in the moved-together position of said support side plates (22, 23).

5. A variable-geometry seat according to any one of the preceding claims **characterised in that** said inset (20) is formed by an extensible material.

6. A variable-geometry seat according to any one of the preceding claims **characterised in that** said inset (20) is at least partly wound around a winding device in the moved-together position of said support side plates (23) and at least partially unwound in the moved-apart position of said support side plates (22, 23), and that it comprises means for blocking said winding device in the moved-apart position of said support side plates (22, 23).

7. A variable-geometry seat according to any one of the preceding claims **characterised in that** it comprises tensioning means for said inset (20), including at least one toggle arrangement (50) comprising at least first (51) and second (52) arms which axe hinged together and which are mounted pivotably with respect to said first (22) and second (23) support side plates respectively about first (A) and second (B) axes respectively which are arranged to be aligned in the moved-apart position of said support side plates (22, 23).

8. A variable-geometry seat according to claim 7 **characterised in that** it comprises control means for said toggle arrangement (50), said control means comprising a control arm (84), a cam (82), a rod (80) and a support link (70) which are co-operable in such a way that a rotary movement of said control arm (84) at least partly opens out said toggle arrangement (50).

9. A variable-geometry seat according to claim 8 **characterised in that** a lever arm (89) which is fixed with respect to and substantially perpendicular to said control arm (84) carries a headrest (18) of said seat (2) and that said control means are adapted to position said headrest (18) above said back-forming portion (6) of said seat (2) in the moved-apart position of said support side plates (22, 23).

10. A variable-geometry seat according to claim 9 **characterised in that** said lever arm (89) is blocked behind said back-forming portion (6) of said seat (2) in the moved-apart position of said support side plates (22, 23).

11. A variable-geometry seat according to any one of the preceding claims **characterised in that** said seat (2) comprises means for laterally pivoting said squab-forming portion (11) into a vertical position and at a given height

12. A variable-geometry seat according to claim 11 **characterised in that** said squab-forming portion (11) when placed in the vertical position serves as an armrest for a seat (3) adjacent to said variable-geometry seat.

13. A motor vehicle bench seat **characterised in that** it comprises at least one variable-geometry seat (2) according to anyone of the preceding claims.

14. A motor vehicle bench seat according to claim 13 **characterised in that** the contractible portion of said seat (2) comprises a support plate (21,101) which is at least partially retractable at the back of a homologous portion of another adjacent seat (7, 12).

15. A motor vehicle bench seat according to claim 13 or claim 14 **characterised in that** the support side plate (22) of said contractible portion of said seat (2) comprises tenons (40), that a portion (5) of another seat (1) which is homologous with respect-to said contractible portion (6) comprises an internal edge (15) adjacent to said support side plate (22) in the moved-apart position of said support side plates (22, 23), said internal edge (15) comprising mortises (41) and that said tenons (40) are received in said mortises (41) in the moved-apart position of said support side plates (22, 23).

16. A vehicle **characterised in that** it is fitted with at least one variable-geometry seat (2) according to any one of the preceding claims.
